# EUROPEAN PATENT APPLICATION

(11) **EP 1 009 192 A2**
(43) Date of publication of application: **14.06.2000**
(21) Application number: 99309586.8
(22) Date of filing: 30.11.1999
(51) Int. Cl.: H04Q 11/04, H04L 12/56

(54) **Distributed 1x N protection switching architecture**

(30) Priority: 10.12.1998 US 209077
(71) Applicant: LUCENT TECHNOLOGIES INC., Murray Hill, New Jersey 07974-0636 (US)
(72) Inventor: Marcotte, Donald R., Derry, N.H. 03038 (US); Sivarasa, Sriram, Haverhill, Massachusetts 01832 (US)
(74) Representative: Johnston, Kenneth Graham

(57) **Abstract**

An arrangement is disclosed for providing equipment 1 x N protection switching in a communications network element or system having a plurality of working port units that process communication signals passing between a first and a second location, having a backup port unit that is used to replace a defective one of the working port units, having a protection switch unit that switches the backup port unit for a defective working port unit, and having a controller for monitoring the operational status of the working port units and upon determining that one of the working port units is defective initiates the switch of the backup port unit for the defective working port, wherein the communication signals are not sent from a working port unit to the protection switching unit and thence to the backup port unit until the working port unit is determined to be defective, thus reducing crosstalk at the protection switching unit, and after the switch is accomplished a verification signal is sent back to the controller that all switching has been accomplished and the backup port is processing the communication signals that had been processed by the defective working port unit. The controller initiates the switching process using the backup port unit which in turn signals the protection unit to connect the signals from the defective working port unit to the backup port unit, and the protection switching unit then forces the defective working port unit to switch the communications signals it had been processing to the protection switching unit. In the event that the defective working port unit has no electrical power the protection switching unit temporarily provides power thereto until it is forced to transfer the communications signals to the protection switch unit for processing by the backup port unit and until the defective working port unit has been replaced.

## Description

### Field of the Invention

This invention relates to the field of protection switching of backup circuits for failed in service, working circuits in communications systems.

### Background of the Invention

In the communications art working port units are provided as the interface between customer equipment or line interface and a central switch fabric. These working port units process signals received from a customer in one electrical format and convert the signals to a format for transmission through the central switch fabric, and visa versa. Typical customer applications are in communication and data networks including DS3, SONET/SDH networks, Bandwidth Managers, ATM (Asynchronous Transfer Mode) and IP networks. The architecture described here can also be applied in any application requiring equipment protection. To minimize communication service failures backup or reserve port units, identical to the working port units, but called protection port units, are provided to automatically replace failed working port units until a failed working port unit can be replaced. Based upon the level of backup protection to be provided, a protection port unit is provided for a predetermined number of working port units. A protection switch unit operating under the control of a controller is provided to automatically switch a protection port unit in place of a failed working port unit.

In such prior art protection switching arrangements all the leads or communication paths passing through each working port unit are connected to the protection switch unit via its connection backplane. This creates a large amount of data communications signal congestion on the backplane which limits the number of working port units and total number of ports (n x k) that can be handled by a protection switch unit. In addition, the many communication paths from the plethora of working port units associated with the protection switch unit and connected to the backplane thereof, all have the communication signals present thereon that are being processed by the working port units. As a result there is an inordinate amount of crosstalk between the individual communication paths which greatly reduces the signal-to-noise ratio of the system.

In addition, in some prior art protection switching arrangements, if there is a power failure to a working port unit, the communication signals being carried therethrough cannot be automatically switched to a protection port unit so there is either a complete failure until the power problem is repaired, or there is some kind of mechanical failsafe circuitry allowing the signal to pass to the protection port unit. This protection switching arrangement is thus bulky, has high frequency limitations, is less reliable and more costly.

Thus, there is a need in the prior art for providing improved protection switching to working port units that does not create a lower signal-to-noise ratio, and which does not have as much backplane congestion on the protection switch unit. In addition, there is a need in the prior art for an improved protection switching arrangement wherein power failure to just a working port unit will never cause the inability to provide protection switching of a protection port unit to replace the non-functioning working port unit.

### Summary of the Invention

The above needs of the prior art are satisfied by the present invention. A new architecture for providing protection switching to working port units is taught wherein there is no reduced signal-to-noise ratio, and wherein a protection switch unit can provide protection switching to a large number of working port units and total number of ports (n x k) because it does not have the backplane signal congestion of prior art protection switching units. In addition, if there is power failure to a working port unit, temporary power will be provided to the failed working port unit so that the communication signals carried therein can be switched to the protection switch unit and thence to a protection port unit.

To prevent a decrease of signal-to-noise ratio at the protection switch unit the communication signals carried through working port units are not normally switched to the backplane of the protection switch unit. The communication signals are only connected to the backplane of the protection switch unit when a working port unit has failed and its signals are force switched to the protection switch unit, and thence to a protection port unit for signal processing. The processed signals output from the protection port unit are forwarded to the central switch fabric. With this mode of operation there is not a plethora of communication signals on the backplane of the protection switch unit causing crosstalk between signals carried by properly functioning working port units.

Further, the number of data carrying connections on the backplane of the protection switch unit are greatly reduced which decreases backplane congestion that also contributes to crosstalk between circuits, and also permits the protection switch unit to provide protection switching to a larger number of working port units.

### Description of the Drawing

The invention will be better understood upon reading the following Detailed Description in conjunction with the drawing in which:
Figure 1 shows a block diagram of one prior art arrangement for providing protection switching to working port units, but which suffers the shortcomings of the prior art;
Figure 2 shows a block diagram of a second prior art arrangement for providing protection switching to working port units, but which suffers the shortcomings of the prior art; and
Figure 3 shows a block diagram of the distributed protection switching arrangement in accordance with the teaching of the present invention which eliminates the aforementioned problems of the prior art.

### Detailed Description

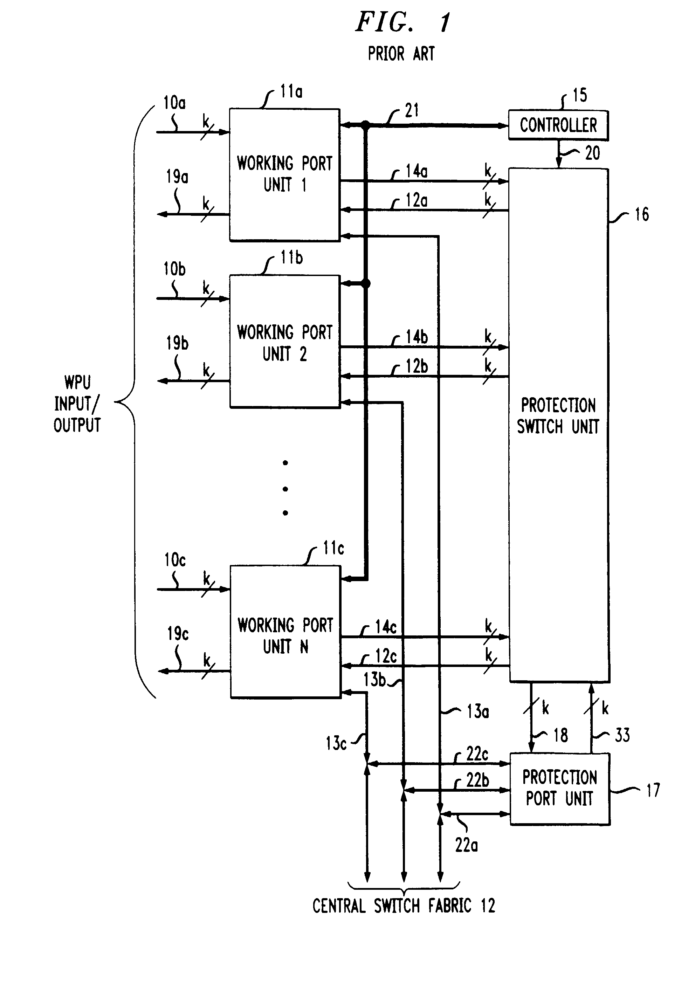

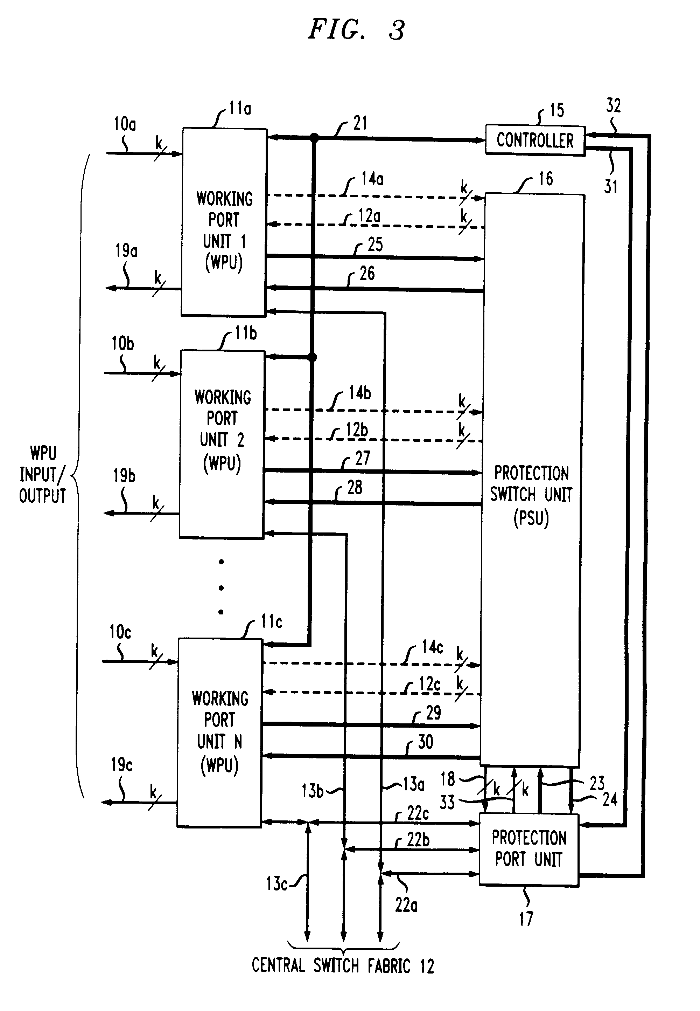

In the protection switching arrangements described herein and shown in Figures 1 - 3, both prior art and the present invention, the paths which control the operation of the protection switching are shown in bold form to distinguish them from paths over which communication signals are carried. Some paths, such as paths 19a,b,c and 12a,b,c in Figure 3, have an arrowhead on only one end which indicates that there is only one path over which signals travel and only in the direction of the arrow. Other paths, such as paths 13a,b,c and 22a,b,c in Figure 3, have an arrowhead on both ends of the path which indicates that signals travel in both directions over the paths. Acronym abbreviations are also used in this Detailed Description to simplify the description. A Working Port Unit 11a, 11b or 11c is designated WPU 11a, 11b or 11c, Protection Switch Unit 16 is designated PSU 16, and Protection Port Unit 17 is designated PPU 17.

Also shown in the block diagrams in Figures 1 through 3, certain leads / paths have a slash mark across them with the small letter "k" adjacent thereto. The slash mark indicates that the single line on the Figure is representative of a multiplicity of leads / paths, and the actual number of leads / paths is "k". Such paths / leads that have arrowhead(s) indicating the direction that signals are carried over the paths.

In the block diagram of one prior art arrangement for providing protection switching to working port units shown in Figure 1, communication signals passing between a customer and a destination specified by the customer via a working port unit (WPU) 11 and central switch fabric 12, have signal processing performed thereon in WPU 11. Three representative WPUs 11a, 11b and 11c are shown. In actuality there are more WPUs being serviced by a protection switch unit (PSU) 16 but only three representative units are shown to explain the prior art and its problems. Data communication signals from one set of customer interfaces to WPU 11a are carried via WPU input path 10a. Data communication signal processing functions are performed on the data communication signals in a manner well known in the art before the processed signals are output on lead 13a to central switch fabric 12 to be connected to a destination designated by the customer. Signals returned from the destination travel through central switch fabric 12 and lead 13a to WPU 11a where the signals are processed to prepare them to travel over output path 19a to the customer. The signal processing that is performed on the data communication signals depends on what comprises paths 10a and 19a. They may anything from low speed asynchronous signals such as, but not limited to, DS3 all the way to high speed synchronous signals such as, but not limited to, STM-1E, and the exact nature of the signal processing is different for each. WPUs 11b and 11c operate in the same manner as WPU 11a so are not described herein.

At the same time that data communications signals from the customer are passing through WPUs 11a, 11b and 11c, these signals are all present at the connection backplane of PSU 16 because the signals are always present on the set of leads 14a, 14b and 14c associated with each of WPUs 11a, 11b and 11c. These leads with live signals thereon at the connection backplane PSU 16 create crosstalk between the signals in WPUs 11a, 11b and 11c which lowers the signal-to-noise ratio, requires more extensive signal processing to remove the effects of the crosstalk, and limits the total number of ports that can be handled by a communications system. This is especially true as the frequency of the data communications signals get higher.

More particularly, PSU 16 has a set of leads 14a, 14b and 14c from each of WPUs 11a, 11b and 11c connected to the its wiring / connection backplane. Each set of leads comprises "k" leads. With all these leads connected to the backplane of PSU 16 there is much wiring "congestion" thereat. The leads are all close together and, as a result, the signals present on each of the sets of leads 14a, 14b and 14c cause crosstalk to the other leads. This crosstalk is noise which decreases the signal-to-noise ratio and thereby degrades the operation of the protection switching system. In addition, due to the noise created by the wiring congestion at the backplane of PSU 16 there is a practical limit as to how many WPUs 11 PSU 16 may provide protection switching to. This increases the cost of the protection switching because more PSUs 16 and PPUs 17 must be provided to provide protection switching to a given number of WPUs 11. In addition, the crosstalk noise requires that more extensive signal processing be performed on the signals to remove the noise.

When a WPU 11, such as WPU 11a, becomes defective, it is sensed by controller 15. Controller 15 sends a control signal to WPU 11 a which takes it off-line by causing its operation to terminate. In addition, controller 15 sends a control signal via lead 20 to PSU 16 causing it to switch leads 14a with the communication signals thereon through to leads 18 which in turn connect the signals to PPU 17. PPU 17 takes over for the signal processing for defective WPU 11 a. PPU 17 processes the communication signals and outputs them on lead 22a to be forwarded to central switch fabric 12 and thence to their destination.

Communication signals returned from the destination via central switch fabric 12 are carried via lead 22a to PPU 17 for signal processing. The processed signals are carried in the opposite direction via leads 33 and PSU 16 to leads 12a, through off-line WPU 11a to path 19a to be carried to the customer. These return signals are also present on the connection backplane of PSU 16 creating more crosstalk and further decreasing the signal-to-noise ratio. This is the problem that is solved by the present invention.

If there is a power failure to one of WPUs 11, WPU 1 la in this example, controller 15 cannot control WPU 11 a via control lead 21 to take it off line and transfer the communications signals to PPU 17 so the customer loses all service until defective WPU 11a can be replaced or repaired.

When defective WPU 11 a has been repaired or replaced, controller 15 drops the connection through PSU 16 to PPU 17, and WPU 11a again processes the data communication signals.

In like manner when WPUs 11b and 11c are determined to be defective they are replaced by PPU 17 in the manner described in the previous paragraphs.

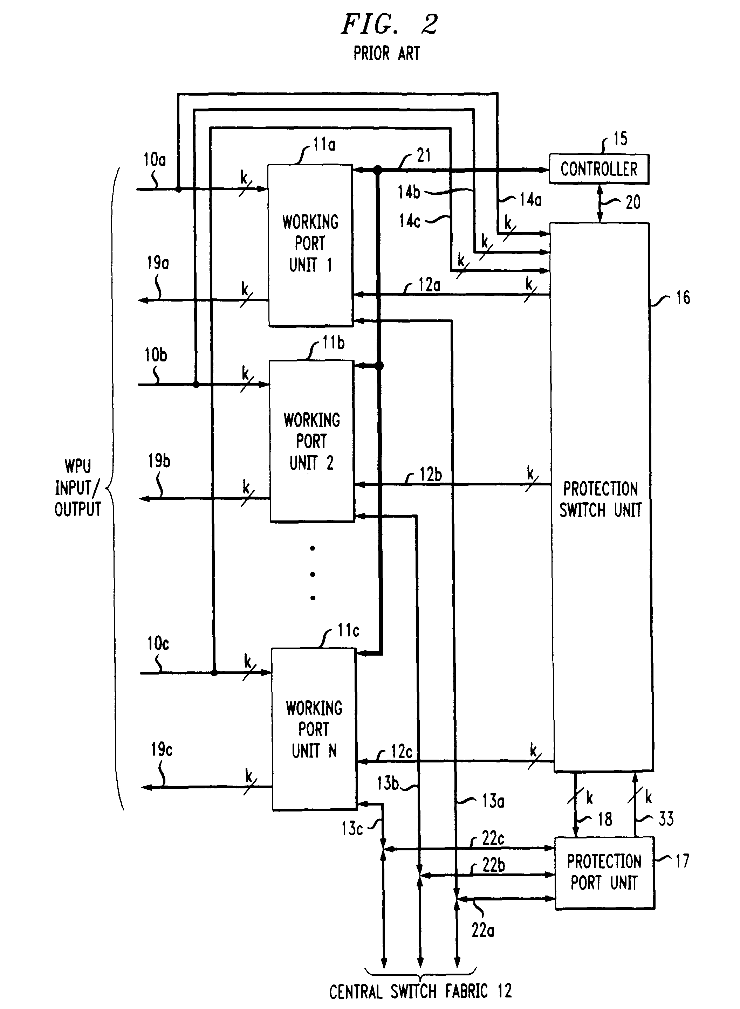

In Figure 2 there is shown a block diagram of a second prior art protection switching arrangement. It differs from the prior art protection switching arrangement shown in and described with reference to Figure 1 in that the data communication leads 10a , 10b and 10c respectively at the inputs of WPUs 11a, 11b and 11c are divided as shown and are also connected via leads 14a, 14b and 14c directly to the connection backplane of PSU 16. The protection switching arrangement otherwise operates the same as the circuitry in Figure 1 so its description is not repeated. This prevents a failed WPU 11 from cutting off data communications signals to PSU 16, but it exacerbates the crosstalk noise problem on the connection backplane of PSU 16 because signals passing through all WPU 11s (WPU 11a, 11b and 11c in this example) are present on the backplane.

Due to the manner of directly connecting the communication signals to PSU 16 via leads 14a, 14b and 14c a power outage at one of WPUs 11 does not terminate all service as with the arrangement shown in and described with reference to Figure 1. More importantly, the prior art protection switching arrangement shown in Figure 2 suffers all the same shortcomings described above for Figure 1. There is the identical backplane signal congestion, crosstalk, degraded signal-to-noise ratio, increased cost of signal processing, and limits on how many ports can be handled by the system.

In Figure 3 is shown a block diagram of the protection switching arrangement in accordance with the teaching of the present invention. This novel protection switching arrangement differs fundamentally from the prior art protection switching arrangements shown in Figures 1 and 2 in several ways. First, the switching control function is shared by WPU 11, PSU 16 and PPU 17 responsive to initiation by controller 15. In contrast, in the prior art, all switching control was handled by PSU 16 responsive to initiation by controller 15. Second, the communication signals passing through all WPUs 11 are not continuously present on leads wired to the connection backplane of PSU 16. Only the communication signals from a defective WPU 11 are switched through and connected to PSU 16 after the WPU 11 has been determined to be defective and protection switching is implemented to bypass the defective WPU 11 with PPU 17. Thus, there are only signals being carried on leads in both directions associated with a defective WPU 11 present at and being switched through PSU 16. The remaining leads connected to the backplane of PSU 16 are not connected to an active signal path through their associated WPUs 11 so there can be no crosstalk from one WPU 11 to another WPU 11. The result is that signal processing required on communications signals to remove crosstalk noise created at PSU 16 is eliminated, and more WPUs 11 can be handle by a PSU 16 and PPU 17. In Figure 3 the data communication signal leadsl2 a,b,c and 14 a,b,c are shown in dotted line form since there are no signals present on these leads until PPU 17 is switched to replace a defective WPU 11.

When the WPUs 11 are operating properly, the data communications signals traveling in one direction travel via leads 10, a WPU 11, leads 13 and central switch fabric 12 to a destination designated by the customer. The signals travelling in the opposite direction travel from the destination, via central switch fabric 12, leads 13, a WPU 11 and leads 19 to the customer. Three representative WPUs 11a, 11b and 11c are shown in Figure 3, but in reality there are many WPUs 11 associated with a PSU 16. Because of the reduced crosstalk noise when using the present invention more WPUs 11 can be handled by a PSU 16 and PPU 17.

More particularly, communication signals from a first customer are carried via WPU input path 10a to WPU 11a. Signal processing functions are performed by WPU 11a on the communication signals, depending on the type of signals, in a manner well known in the art before the processed signals are output on lead 13a to central switch fabric 12 to be connected to a destination designated by the customer. Signals returning from the destination travel through central switch fabric 12 and lead 13a to WPU 11a where they are again signal processed, depending on the type of signals, and then travel over output path 19a to the customer. The signal processing that is performed on the communication signal depends on what comprises path 10a, but all are well known in the art. It may be low speed asynchronous signals such as, but not limited to, DS3 or high speed synchronous signals such as, but not limited to, STM-1E. WPUs 11b and 11c operate in the same manner as WPU 11 a so are not described herein.

When a WPU 11, such as WPU 11a, becomes defective it sends a trouble signal to controller 15 over control lead 21. In response thereto, controller 15 sends a control signal via lead 31 to PPU 17 indicating that it specifically replace defective WPU 11a. PPU 17 in turn sends a control signal via lead 23 to PSU 16 which results in it switching WPU 11a leads 14a through to PPU 17 via leads 18. PSU 16 in turn sends a control signal over control lead 26 to WPU 11 a which forces WPU 11a to switch its data communication signals from leads 13a (to central switch fabric 12) to leads 14a which then carry the signals to the backplane and switch of PSU 16. PSU 16 connects the signals to PPU 17 via leads 18. The data communication signals thereby bypass the defective signal processing circuitry in WPU 11a. Up to the time of this forced switch there are no data communication signals present on leads 14a that can contribute to crosstalk on the backplane of PSU 16. Accordingly, signal processing to remove the affects of the crosstalk are not required.

The path the communication signals now travel is as follows. The signal from the customer on path 10a is now routed (force switched) to leads 14a and are thereby input to PSU 16. The signals are switched through PSU 16 and output on leads 18 to PPU 17. PPU 17 processes the signals in the same manner that had been previously performed by now defective working port unit 11 a and outputs the signals on lead 22a to be sent to central switch fabric 12 which forwards the signals to the destination specified by the customer. A signal being returned to the customer travels from the destination and through central switch fabric 12 to leads 22a to PPU 17 which processes the signals in preparation for sending them via path 19a to the customer. After such signal processing in PPU 17 the signals are sent via leads 33 to PSU 16 where they are carried through the switch to leads 12a. The signals then return through a switch in defective working port unit 11a to path 19a where they are carried to the customer. The same operation and similar paths apply to working ports 11b and 11c when they are defective. Accordingly, the description of the paths and protection switching operation for working ports 11b and 11c is not repeated.

After defective WPU 11a is forced by PSU 16 to switch its communication signals to leads 14a it sends a verification signal to PSU 16 via lead 25 indicating that the switch has been accomplished. In turn PSU 16 sends a verification signal to PPU 17 via lead 24 indicating that WPU 11a has switched and PSU 16 has also switched the communication signals to PPU 17. Finally, PPU 17 returns a verification signal to controller 15 via lead 32 indicating that all switching has been completed and PPU 17 is now processing the communication signals in both directions that were previously processed by defective WPU 11a.

At the same time that PSU 16 is forcing WPU 11a to switch its communication signals it also detects if there is power applied to WPU 11a. If there is no power thereto WPU 11a cannot switch as described, so PSU 16 supplies the necessary power to WPU 1 la so that it can switch its communication signals to PSU 16 and thence to PPU 17 which will perform the required signal processing on the communication signals.

In like manner when WPUs 11b and 11c in Figure 3 indicate to controller 15 that they are defective they are replaced by PPU 17 in the same manner described in the previous paragraphs. Accordingly, this operation is not repeated.

While what has been described herein is the preferred embodiment of the invention, it will be obvious to those skilled in the art that numerous changes may be made without departing from the spirit, scope and teaching of the present invention. For example, if it desired to switch PPU 17 in place of a WPU 11, or a first circuit in place of a second circuit, for whatever reason, defective circuit or not, the switching arrangement disclosed herein can be utilized.

## Claims

1. A method for providing protection switching in a communications network element or system having a plurality of working port units that process communication signals passing between a first and a second location, having a protection port unit that is used to be switched in place of a working port unit, having a protection switch unit that switches the protection port unit in place of a working port unit, and having a controller for monitoring the working port units, and upon directly or indirectly determining that the protection port unit is to be switched in place of a working port unit, initiating the switch of the protection port unit for the working port unit, said method comprising the step of:
connecting said communication signals normally being signal processed by a first one of said working port units to said protection switch unit only when said protection port unit is to be switched in place of said first working port unit.

2. The method for providing protection switching in accordance with claim 1 further comprising the step of:
connecting electrical power to said first working port unit when there is no power being applied thereto to permit said first working port unit to connect said communication signals it had been signal processing to said protection switch unit.

3. The method for providing protection switching in accordance with claim 2 further comprising the step of:
verifying to said controller that said communication signals that had been signal processed by said first working port have been transferred to and are being signal processed by said protection port unit.

4. A method for providing protection switching in a communications network element or system having a plurality of working port units that process communication signals passing between a first and a second location, having a protection port unit that is used to be switched in place of a working port unit, having a protection switch unit that switches the protection port unit in place of a working port unit, including a defective working port unit, and having a controller for monitoring the working port units, and upon directly or indirectly determining that the protection port unit is to be switched in place of working port unit, initiating the switch of the protection port unit for the working port unit, said method comprising the step of:
sending a first signal from said controller to said protection port unit to initiate the switch of said protection port unit for a first working port unit upon a determination being made that said protection port unit is to perform signal processing on signals that are being processed by said first working port unit.

5. The method for providing protection switching in accordance with claim 4 further comprising the step of:
sending a second signal from said protection port unit to said protection switch unit causing said protection switch unit to connect said protection port unit to said first working port unit to process the communication signals that had been processed by said first working port unit.

6. The method for providing protection switching in accordance with claim 5 further comprising the step of:
sending a third signal from said protection switch unit to said first working port unit forcing said first working port unit to switch the communications signals it has been signal processing to said protection switch unit for signal processing.

7. The method for providing protection switching in accordance with claim 6 further comprising the step of:
sending a first verification signal from said first working port unit to said protection switch unit indicating that the communications signals said first working port had been signal processing have been switched to said protection switch unit.

8. The method for providing protection switching in accordance with claim 7 further comprising the step of:
sending a second verification signal from said protection switch unit to said protection port unit indicating that said first working port unit has switched the communication signals it had been processing to said protection switch unit, and said protection switch unit has connected said communication signals to said protection port unit for signal processing.

9. The method for providing protection switching in accordance with claim 8 further comprising the step of:
sending a third verification signal from said protection port unit to said controller indicating that said first working port unit has switched the communication signals it had been signal processing to said protection switch unit, said protection switch unit has connected said communication signals to said protection port unit, and said protection port unit is signal processing said communications signals.

10. Apparatus for providing protection switching in a communications network element or system having a plurality of working port units that process communication signals passing between a first and a second location, having a protection port unit that is used to be switched in place of a working port unit, having a protection switch unit that switches the protection port unit in place of a working port unit, and having a controller for monitoring the working port units and upon directly or indirectly determining that the protection port unit is to be switched in place of a working port unit, initiating the switch of the protection port unit for the working port, said apparatus comprising:
means in each of said working port units for connecting said communication signals normally being signal processed by said working port units to said protection switch unit only when said protection port unit is to be switched in place of a first one of said working port units; and
means in said protection switch unit for enabling the operation of said connecting means in said first one of said working port units when said protection port unit is to be switched in place of said first one of said working port units, said communication signals in first one of said working port units only then being input to said protection switch unit.

11. The invention in accordance with claim 10 further comprising:
means for connecting electrical power to said first working port unit when there is no power being applied thereto to permit said first working port unit to connect said communication signals it had been signal processing to said protection switch unit.

12. The invention in accordance with claim 10 further comprising:
means for sending a first signal from said controller to said protection port unit to initiate the switch of said protection port unit for said first working port unit upon a determination being made that said protection port unit is to perform signal processing on signals that had been processed by said first working port unit.

13. The invention in accordance with claim 12 further comprising:
means for sending a second signal from said protection port unit to said protection switch unit causing said protection switch unit to connect said protection port unit to said first working port unit to process the communication signals that had been processed by said first working port unit.

14. The invention in accordance with claim 13 further comprising:
means for sending a third signal from said protection switch unit to said working port unit forcing said first working port unit to switch the communications signals it had been signal processing to said protection switch unit to then be connected to said protection port unit for signal processing.

15. The invention in accordance with claim 14 further comprising:
means for sending a verification signal from said protection port unit to said controller indicating that said first working port unit has switched the communication signals it had been processing to said protection switch unit, and said protection switch unit has switched said communication signals to said protection port unit for signal processing.

16. The invention in accordance with claim 15 further comprising:
means for connecting electrical power to said first working port unit when there is no power being applied thereto to permit said first working port unit to connect said communication signals it had been signal processing to said protection switch unit.
